# EUROPEAN PATENT SPECIFICATION

(11) **EP 4 056 816 B1**
(45) Date of publication and mention of the grant of the patent: **30.10.2024**
(21) Application number: 22157776.0
(22) Date of filing: 21.02.2022
(51) Int. Cl.: F01N 1/02, F01N 1/24

(54) **VEHICLE MUFFLER MANUFACTURING METHOD**
VERFAHREN ZUR HERSTELLUNG EINES FAHRZEUGSCHALLDÄMPFERS
PROCÉDÉ DE FABRICATION DE SILENCIEUX DE VÉHICULE

(30) Priority: 08.03.2021 JP 2021035930
(43) Date of publication of application: 14.09.2022
(73) Proprietor: Nakagawa Sangyo Co., Ltd., Inuyama-shi, Aichi 484-0917 (JP)
(72) Inventor: NAKAGAWA, Hiroshige, Inuyama-shi, 484-0917 (JP); NAKAGAWA, Noriaki, Inuyama-shi, 484-0917 (JP)
(74) Representative: Kramer Barske Schmidtchen Patentanwälte PartG mbB

(56) References cited:
- DE-A1- 3 304 809
- US-A- 6 138 791
- US-A1- 2001 011 780
- US-A1- 2002 079 161
- US-A1- 2009 272 600
- US-A1- 2010 307 863

## Description

### BACKGROUND OF THE INVENTION

### Field of the Invention

The present invention relates to a vehicle muffler manufacturing method and, particularly, to a method for manufacturing a vehicle muffler having a structure including a sound-absorbing material provided between pipes of an inner-outer double pipe.

### Description of the Related Art

US 6,138,791 A, US 2009/0272690 A1, US 2001/0011780 A1, US 2002/0079161 A1, and US 2010/0307863 A1 disclose mufflers. A conventional method disclosed in Japanese Patent Laid-Open No. 58-198094 is often used as a method for automatically installing the sound-absorbing material in the vehicle muffler having the above structure. In this method, glass fiber serving as the sound-absorbing material is blown into a space between inner and outer pipes constituting the inner-outer double pipe of the above-mentioned muffler using a nozzle supplied with compressed air, and, at the same time, air inside the inner pipe having many sound-absorbing holes formed thereon is sucked using a fan to facilitate the blowing of the glass fiber.

However, the above-mentioned conventional method requires large-scale equipment including the nozzle and the fan for blowing of the fiber and piping for the nozzle and the fan. Also, the conventional method requires a long time from start to completion of the blowing of the fiber, which disadvantageously increases a takt time of a manufacturing line.

In view of the above, the present invention has been made to solve the above problems, and an object thereof is to provide a half body manufacturing method and a vehicle muffler manufacturing method that can simply and promptly install a sound-absorbing material between pipes of an inner-outer double pipe of a vehicle muffler.

### SUMMARY OF THE INVENTION

In order to achieve the above object, a first aspect of the present invention is a method according to claim 1.

According to the first aspect, it is possible to efficiently manufacture the porous half bodies constituting the tubular body serving as the sound-absorbing material.

In a second aspect, the nonwoven fabric (2) is obtained by: opening strands (1) of the inorganic fibers (11); and loosely knitting the opened strands longitudinally and laterally and subjecting the knitted strands to needle processing.

According to the second aspect, sound absorption is efficiently performed due to small spaces formed by the opened strands. In addition, since the strands are loosely knitted longitudinally and laterally and subjected to needle processing, the strength of the formed tubular body can be sufficiently maintained.

In a third aspect of the present invention, basalt fiber (11) or glass fiber is used as the inorganic fiber.

According to the third aspect, sufficient resistance to high-temperature exhaust gas and exhaust gas components can be exhibited.

A fourth aspect of the present invention is a method according to claim 4.

In the fourth aspect, the pair of half bodies made of the nonwoven fabric are attached in an abutting state to the outer periphery of the inner pipe so as to cover the inner pipe to obtain the tubular body serving as the sound-absorbing material, and the tubular body is covered with the outer pipe. Thus, it is possible to adjust to an inner pipe and an outer pipe that have not a parallel tubular shape, but an odd tubular shape. Further, compared to the conventional method that blows fiber for sound absorption into a space between the inner pipe and the outer pipe, large-scale equipment is not required, and the takt time of the manufacturing line can be largely reduced. In particular, since the inorganic fiber in the filament form is used, it is possible to endure high back pressure of exhaust gas.

The above reference signs in parentheses indicate the correspondence relationship with concrete means described in embodiments described below for reference.

As described above, according to the vehicle muffler manufacturing method of the present invention, it is possible to simply and promptly install the sound-absorbing material between the pipes of the inner-outer double pipe of the vehicle muffler.

### BRIEF DESCRIPTION OF THE DRAWINGS

FIG. 1 is an enlarged side view of a strand;
FIG. 2 is an enlarged side view of an opened strand;
FIG. 3 is a plan view of a nonwoven fabric;
FIG. 4 is a perspective view of the nonwoven fabric applied with a binder;
FIG. 5 is a perspective view of the nonwoven fabric wrapped around a core metal;
FIG. 6 is a schematic perspective view illustrating a state in which a rotary roller is brought into contact with an outer periphery of the nonwoven fabric wrapped around the core metal;
FIG. 7 is a schematic perspective view illustrating a state in which the nonwoven fabric is removed from the core metal;
FIG. 8 is an overall perspective view of a tubular body viewed in an end-face direction thereof;
FIG. 9 is a perspective view illustrating a state in which the tubular body is inserted into a double pipe;
FIG. 10 is an overall perspective view of a vehicle muffler;
FIG. 11 is a cross-sectional view of the vehicle muffler taken along line XI-XI of FIG. 10;
FIG. 12 is an overall exploded perspective view of a tubular body;
FIG. 13 is a cross-sectional view in a process of manufacturing a half body of the tubular body;
FIG. 14 is a cross-sectional view in the process of manufacturing the half body of the tubular body and a perspective view of a nonwoven fabric rolled up in a tubular shape;
FIG. 15 is a cross-sectional view in the process of manufacturing the half body of the tubular body;
FIG. 16 is a cross-sectional view in the process of manufacturing the half body of the tubular body; and
FIG. 17 is an overall perspective view of the manufactured half body of the tubular body.

### DETAILED DESCRIPTION OF THE PREFERRED EMBODIMENT

### First Embodiment

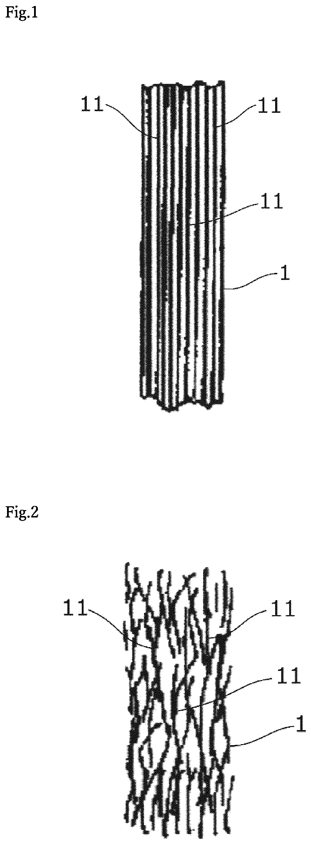

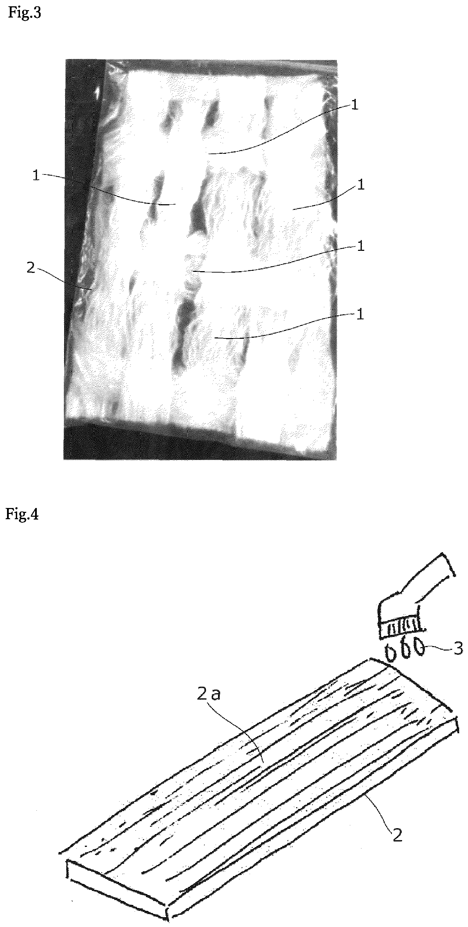

In a manufacturing method of a first exemplary embodiment, for example, a basalt fiber 11 (FIG. 1) which is a filament of 9 µmϕ to 24 µmϕ is used as an inorganic fiber. A strand 1 which is a bundle of, for example, 1000 to 4000 basalt fibers 11 is opened using, for example, air (FIG. 2). Then, the opened strands 1 are loosely knitted and stacked respectively as warp and woof and subjected to needle processing to obtain a nonwoven fabric 2 having a rectangular mat shape as illustrated in FIG. 3.

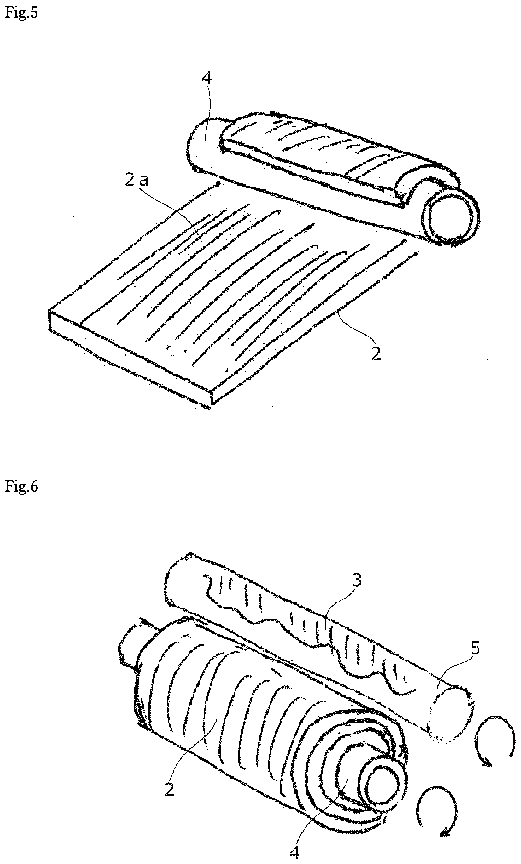

An inorganic binder 3 is applied to one surface 2a of the nonwoven fabric 2 obtained in this manner (FIG. 4). And as illustrated in FIG. 5, the nonwoven fabric 2 is wrapped around a core metal 4 with the surface 2a applied with the binder 3 located on an inner peripheral side. In this state, the inner peripheral surface 2a of the nonwoven fabric 2 is hardened with the binder 3. Then, as illustrated in FIG. 6, a rotary roller 5 supplied with the same binder 3 described above is brought into contact with an outer peripheral surface to infiltrate the binder 3 into the entire outer periphery of the nonwoven fabric 2 wrapped around the core metal 4 and the inside of the nonwoven fabric 2.

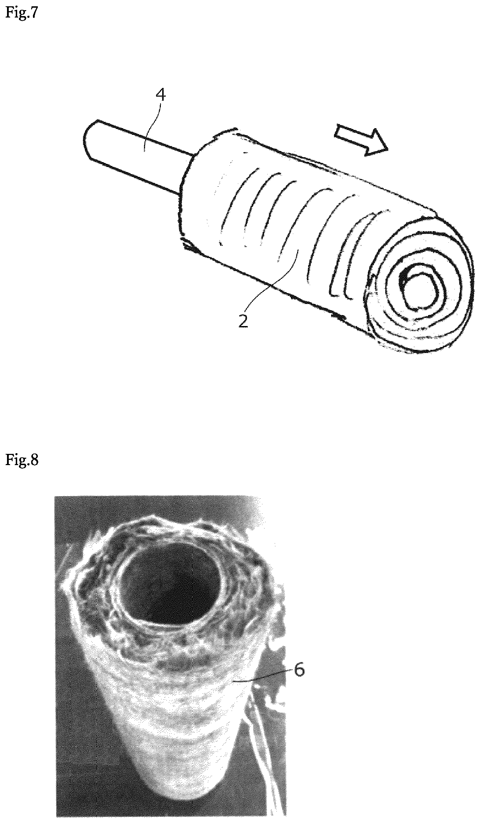

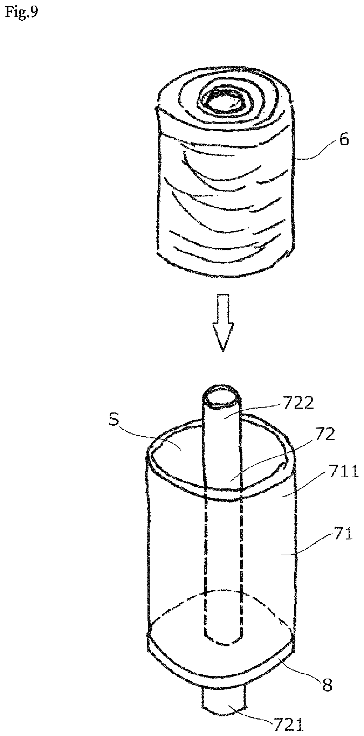

Then, the nonwoven fabric 2 wrapped around the core metal 4 and infiltrated with the binder 3 is left inside a heating furnace heated to, for example, 240°C for 1 to 2 hours to solidify the whole thereof. Then, the nonwoven fabric 2 is removed from the core metal 4 (FIG. 7) to obtain a tubular body 6 for sound absorption as illustrated in FIG. 8. In this state, an outer diameter of the tubular body 6 is slightly smaller than an inner diameter of an outer pipe 71 (FIG. 9) of an inner-outer double pipe (described later), and an inner diameter of the tubular body 6 is slightly larger than an outer diameter of an inner pipe 72 of the double pipe. Note that although FIG. 8 is a perspective view illustrating the tubular body 6 as if the tubular body 6 is a conical tube, the tubular body 6 is actually a parallel cylindrical body. The tubular body 6 does not necessarily have to be a cylindrical body and may be, for example, an elliptical tube or a rectangular tube.

Then, the tubular body 6 formed in this manner is inserted between the pipes of the double pipe constituting the vehicle muffler, which is illustrated in FIG. 9. The double pipe includes the outer pipe 71 which has a larger diameter and is held in a vertical position by holding means (not illustrated), and the inner pipe 72 which has a smaller diameter and has a plurality of sound-absorbing holes (not illustrated) formed thereon, and the inner pipe 72 is located on the center of the outer pipe 71. An end plate 8 is welded to one end of the outer pipe 71 so as to close an opening on the one end. One end 721 (the lower end in the drawing) of the inner pipe 72 penetrates the center of the end plate 8 so that the inner pipe 72 is supported inside the outer pipe 71.

The other end 711 (the upper end in the drawing) of the outer pipe 71 is open. As indicated by an arrow in FIG. 9, the tubular body 6 is inserted and installed, from above, into a space S between the inner pipe 72 located on the center of the opening and the outer pipe 71 so as to serve as a sound-absorbing material. After the tubular body 6 is installed, another end plate (not illustrated) is welded to the opening of the outer pipe 71 to close the opening on the other end 711 with the other end 722 of the inner pipe 72 penetrating the center of the end plate to obtain the vehicle muffler.

As described above, according to the manufacturing method of the present invention, the tubular body for sound absorption is inserted and installed between the inner pipe and the outer pipe with a single motion. Thus, compared to the conventional method that blows fiber for sound absorption, large-scale equipment is not required, and the takt time of the manufacturing line can be largely reduced.

### Second Embodiment

In the first embodiment, the method for manufacturing the vehicle muffler including the outer pipe which is the simple parallel tubular body has been described. On the other hand, in the present embodiment, an example of a method for manufacturing a vehicle muffler including an outer pipe which is an odd-shaped tubular body will be described below.

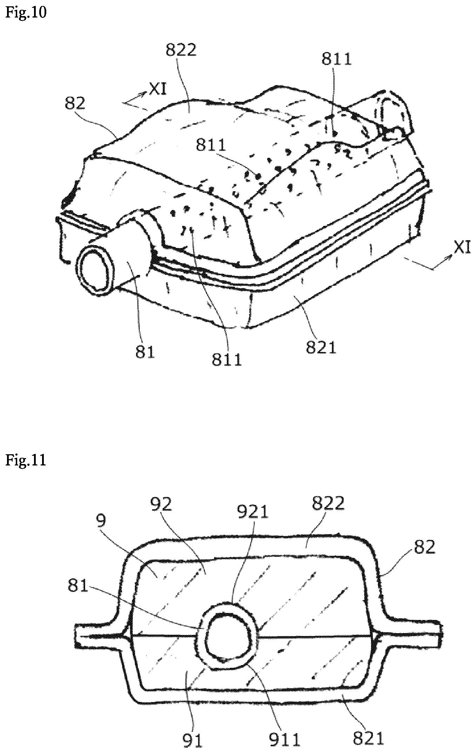

FIG. 10 is a perspective view of the vehicle muffler in the present embodiment. FIG. 11 is a sectional view of the vehicle muffler in the present embodiment. As illustrated in FIGS. 10 and 11, an inner pipe 81 of the vehicle muffler has a plurality of sound-absorbing holes 811 formed on the outer periphery thereof and has a parallel cylindrical shape. On the other hand, an outer pipe 82 of the vehicle muffler is an odd-shaped tubular body having a box shape, and the inner pipe 81 penetrates the outer pipe 82. The outer pipe 82 includes a pair of half tubular bodies 821 and 822 each of which is formed by bending into a predetermined shape, specifically, into an open container shape. The half tubular bodies 821 and 822 abut against each other with the inner pipe 81 interposed between open edges of the half tubular bodies 821 and 822. Further, a tubular body 9 (FIG. 11, described below) serving as a sound-absorbing material is installed inside a space between the inner pipe 81 and the outer pipe 82 constituting an inner-outer double pipe. Note that the inner pipe 81 does not necessarily have to have the parallel cylindrical shape.

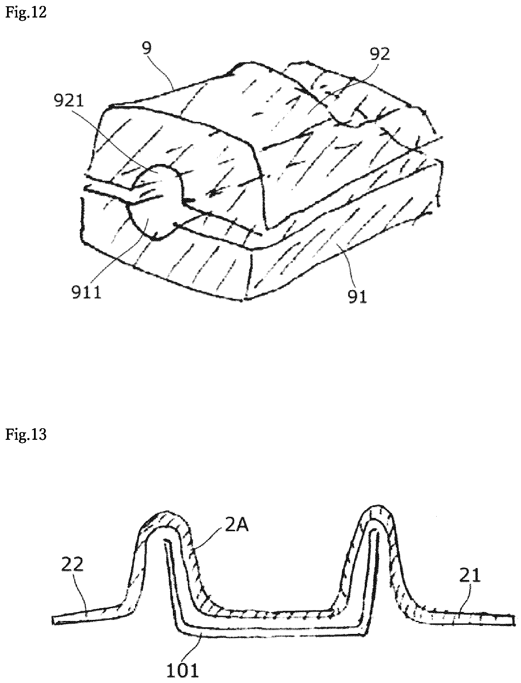

The tubular body 9 includes a half body 91 installed inside the half tubular body 821 of the outer pipe 82 and a half body 92 installed inside the half tubular body 822 of the outer pipe 82. The half body 91 and the half body 92 abut against each other to constitute the tubular body 9 having a tubular shape. As illustrated in FIG. 12, a recessed part 911 having a substantially semicircular cross section along the outer periphery of the inner pipe 81 is formed on the center of an abutment surface of the half body 91, and a recessed part 921 having a substantially semicircular cross section along the outer periphery of the inner pipe 81 is formed on the center of an abutment surface of the half body 92. Also, an outer peripheral surface of the half body 91 is formed in a shape extending along an inner peripheral surface of the half tubular body 821 of the outer pipe 82, and an outer peripheral surface of the half body 92 is formed in a shape extending along an inner peripheral surface of the half tubular body 822 of the outer pipe 82.

The tubular body 9 serving as the sound-absorbing material is attached to the outer periphery of the inner pipe 81 so as to cover the inner pipe 81 by making the half bodies 91 and 92 like these abut against each other with the inner pipe 81 located in the recessed parts 911 and 921 of the half bodies 91 and 92 (FIG. 11). Then, the tubular body 9 integrated with the inner pipe 81 is installed inside the half tubular body 821 constituting the outer pipe 82, and the half tubular body 822 constituting the outer pipe 82 is put thereon from above so as to abut against the open edge of the half tubular body 821 to complete the vehicle muffler (FIG. 10).

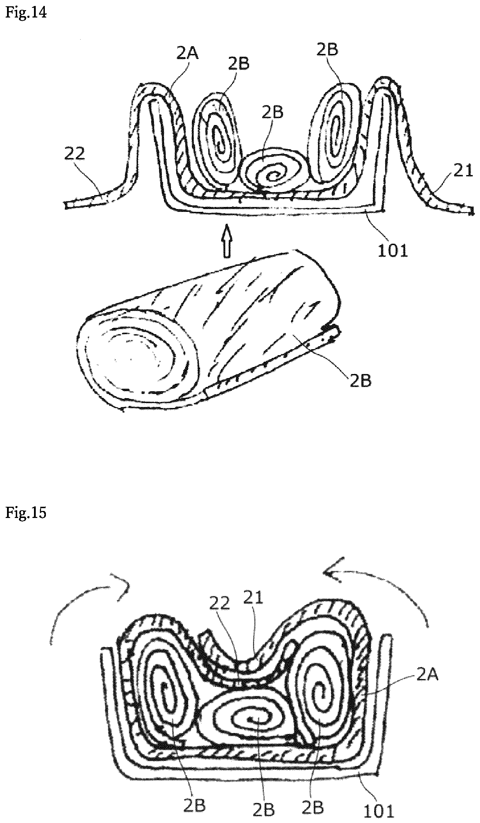

The above-mentioned half body 91 of the tubular body 9 is manufactured in the following manner. Note that a method for manufacturing the half body 92 is also similar to the method for manufacturing the half body 91. A binder is applied to one surface of a nonwoven fabric 2A which is similar to the one manufactured by the method described in the first embodiment (refer to FIG. 3). As illustrated in FIG. 13, the nonwoven fabric 2A is horizontally installed, with the surface applied with the binder facing upward, along an inner peripheral surface of a container-shaped jig 101 which is open and has the same cross section as the half tubular body 821 of the outer pipe 82 (FIG. 11) so as to hang down in a recessed shape. Then, as illustrated in FIG. 14, a plurality of other nonwoven fabrics 2B each of which is similar to the nonwoven fabric 2A are rolled up into a tubular shape and inserted into a recessed space formed by the nonwoven fabric 2A.

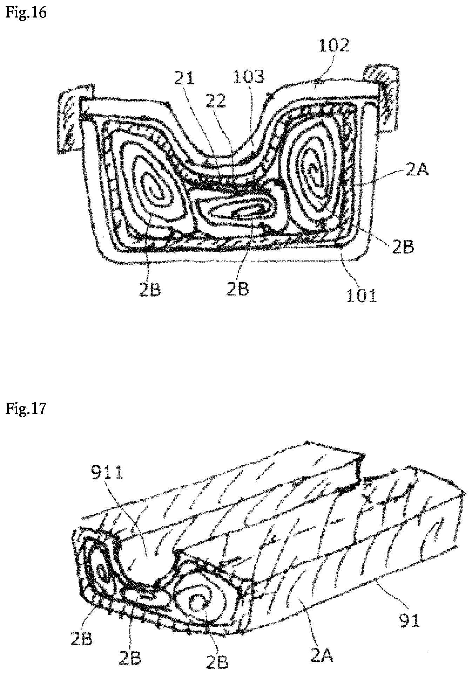

Then, as illustrated in FIG. 15, both side edges 21 and 22 of the nonwoven fabric 2A are folded inward so as to wrap the plurality of nonwoven fabrics 2B (FIG. 15), and a lid-shaped jig 102 is put thereon to close the container-shaped jig 101 so as to cover the nonwoven fabric 2A (FIG. 16). Note that the lid-shaped jig 102 includes a projection 103 which is formed by bending the center thereof and projects downward in a semicircular shape. The projection 103 pushes the folded side edges 21 and 22 of the nonwoven fabric 2A downward. At the same time, the inside nonwoven fabrics 2B rolled up in a tubular shape become slightly compressed. In this state, the container-shaped jig 101 closed with the lid-shaped jig 102 is put into a heating furnace, heated at, for example, 240°C for 1 to 2 hours to solidify the nonwoven fabric 2A, and then taken out from the heating furnace to obtain the half body 91 described above (FIG. 17).

### Other Embodiments

Note that, for example, glass fiber can be used as the inorganic fiber instead of the basalt fiber described above.

Further, the nonwoven fabric formed by knitting strands longitudinally and laterally does not necessarily have to be used. A nonwoven fabric formed by aligning and stacking strands in the same direction or a nonwoven fabric formed by alternately stacking, longitudinally and laterally, strands aligned in the same direction and the like may be used.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A half body manufacturing method for manufacturing each of a pair of half bodies (91, 92), the pair of half bodies (91, 92) being attached, in an abutting state, to an outer periphery of an inner pipe (81) of an inner-outer double pipe constituting a vehicle muffler so as to cover the inner pipe (81), to constitute a tubular body (9) serving as a sound-absorbing material, the method comprising:
horizontally installing one nonwoven fabric (2A) made of inorganic fibers (11) each being in a filament form, the one nonwoven fabric (2A) having one surface applied with a binder (3), in a recessed shape along an inner periphery of a container-shaped jig (101), the container-shaped jig (101) being open;
rolling up a plurality of other nonwoven fabrics (2B) made of inorganic fibers (11) each being in a filament form, inserting the other nonwoven fabrics (2B) into a recessed space formed by the one nonwoven fabric (2A), and wrapping the other nonwoven fabrics (2B) with the one nonwoven fabric (2A); and
then closing the container-shaped jig (101) and heating the container-shaped jig (101) to a predetermined temperature.

2. The half body manufacturing method according to claim 1, wherein the nonwoven fabric (2) is obtained by:
opening strands of the inorganic fibers (11); and
loosely knitting the strands longitudinally and laterally and subjecting the knitted strands to needle processing.

3. The half body manufacturing method according to claim 1 or 2, wherein basalt fiber or glass fiber is used as the inorganic fiber (11).

4. A vehicle muffler manufacturing method, comprising:
forming a pair of half bodies (91, 92) with a nonwoven fabric (2) made of inorganic fibers (11) each being in a filament form by a method according to any one of claims 1 to 3;
attaching the half bodies (91, 92) in an abutting state to the outer periphery of the inner pipe (81) of the inner-outer double pipe constituting the vehicle muffler so as to cover the inner pipe (81), to obtain the tubular body (9) serving as a sound-absorbing material; and
covering the tubular body (9) with an outer pipe (82) .

## Patentansprüche

1. Körperhälftenherstellungsverfahren zum Herstellen jeder eines Paares Körperhälften (91, 92), welches Paar Körperhälften (91, 92) in einem anliegenden Zustand an einem Außenumfang eines Innenrohrs (81) eines Innen-Außen-Doppelrohrs, das einen Fahrzeugschalldämpfer darstellt, so angebracht wird, dass es das Innenrohr (81) bedeckt, so dass es einen rohrförmigen Körper (9) darstellt, der als ein schallabsorbierendes Material dient, umfassend:
horizontales Installieren eines Vliesstoffs (2A), der aus anorganischen Fasern (11), die jeweils in einer Faserform sind, ausgebildet ist, welcher eine Vliesstoff (2A) eine Oberfläche, auf der ein Bindemittel (3) aufgetragen ist, aufweist, in einer vertieften Form entlang eines Innenumfangs einer behälterförmigen Vorrichtung (101), welche behälterförmige Vorrichtung (101) offen ist,
Aufrollen einer Mehrzahl anderer Vliesstoffe (2B), die aus anorganischen Fasern (11), die jeweils in einer Faserform sind, ausgebildet sind, Einfügen der anderen Vliesstoffe (2B) in einen vertieften Raum, der durch den einen Vliesstoff (2A) ausgebildet wird, und Umwickeln der anderen Vliesstoffe (2B) mit dem einen Vliesstoff (2A); und
dann Verschließen der behälterförmigen Vorrichtung (101) und Erhitzen der behälterförmigen Vorrichtung (101) auf eine vorbestimmte Temperatur.

2. Körperhälftenherstellungsverfahren nach Anspruch 1, bei dem der Vliesstoff (2) erhalten wird durch:
Öffnen von Strängen der anorganischen Fasern (11); und
loses longitudinales und laterales Verstricken der Stränge und Unterziehen der verstrickten Stränge einer Nadelbearbeitung.

3. Körperhälftenherstellungsverfahren nach Anspruch 1 oder 2, bei dem Basaltfaser oder Glasfaser als die anorganische Faser (11) verwendet wird.

4. Fahrzeugschalldämpferherstellungsverfahren, umfassend:
Ausbilden eines Paares Körperhälften (91, 92) mit einem Vliesstoff (2), der aus anorganischen Fasern (11), die jeweils in einer Faserform sind, ausgebildet ist, durch ein Verfahren nach einem der Ansprüche 1 bis 3;
Anbringen der Körperhälften (91, 92) in einem anliegenden Zustand an dem Außenumfang des Innenrohrs (81) des Innen-Außen-Doppelrohrs, das den Fahrzeugschalldämpfer darstellt, so dass das Innenrohr (81) bedeckt wird, so dass der rohrförmige Körper (9), der als ein schallabsorbierendes Material dient, erhalten wird, und
Bedecken des rohrförmigen Körpers (9) mit einem Außenrohr (82).

## Revendications

1. Procédé de fabrication de demi-corps pour fabriquer chacun une paire de demi-corps (91, 92), la paire de demi-corps (91, 92) étant fixée, dans un état en butée, à une périphérie extérieure d'un tuyau intérieur (81) d'un double tuyau intérieur-extérieur constituant un silencieux de véhicule de manière à recouvrir le tuyau intérieur (81), pour constituer un corps tubulaire (9) servant de matériau absorbant le son, le procédé comprenant les étapes consistant à :
installer horizontalement un tissu non tissé (2A) composé de fibres inorganiques (11) se présentant chacune sous la forme de filament, le tissu non tissé (2A) ayant une surface appliquée avec un liant (3), dans une forme en retrait le long d'une périphérie intérieure d'un gabarit en forme de récipient (101), le gabarit en forme de récipient (101) étant ouvert ;
enrouler une pluralité d'autres tissus non tissés (2B) constitués de fibres inorganiques (11) se présentant chacune sous forme de filament, insérer les autres tissus non tissés (2B) dans un espace en retrait formé par le premier tissu non tissé (2A), et envelopper les autres tissus non tissés (2B) avec le premier tissu non tissé (2A) ; et
fermer ensuite le gabarit en forme de récipient (101) et chauffer le gabarit en forme de récipient (101) à une température prédéterminée.

2. Procédé de fabrication de demi-corps selon la revendication 1, dans lequel le tissu non tissé (2) est obtenu par l'étape consistant à :
ouvrir des brins de fibres inorganiques (11) ; et tricoter sans serrer les brins longitudinalement et latéralement et soumettre les brins tricotés à un traitement à l'aiguille.

3. Procédé de fabrication de demi-corps selon la revendication 1 ou 2, dans lequel la fibre de basalte ou la fibre de verre est utilisée comme fibre inorganique (11).

4. Procédé de fabrication de silencieux de véhicule, comprenant les étapes consistant à :
former une paire de demi-corps (91, 92) avec un tissu non tissé (2) constitué de fibres inorganiques (11) se présentant chacune sous forme de filament par un procédé selon l'une quelconque des revendications 1 à 3 ;
fixer les demi-corps (91, 92) dans un état en butée à la périphérie extérieure du tuyau intérieur (81) du double tuyau intérieur-extérieur constituant le silencieux de véhicule de manière à recouvrir le tuyau intérieur (81), afin d'obtenir le corps tubulaire (9) servant de matériau insonorisant ; et
recouvrir le corps tubulaire (9) d'un tuyau extérieur (82).
